Europäisches Patentamt

European Patent Office

Office européen des brevets

(19)

(11) Numéro de publication: **0 229 414**
**B1**

(12) **FASCICULE DE BREVET EUROPÉEN**

(45) Date de publication du fascicule du brevet:
18.04.90

(51) Int. Cl.⁴: **B01D 63/00**, C02F 1/44

(21) Numéro de dépôt: **86202187.0**

(22) Date de dépôt: **01.12.86**

(54) Dispositif d'épuration d'eau notamment salée, par osmose inverse.

(30) Priorité: **11.12.85 FR 8518460**

(43) Date de publication de la demande:
**22.07.87 Bulletin 87/30**

(45) Mention de la délivrance du brevet:
**18.04.90 Bulletin 90/16**

(84) Etats contractants désignés:
**BE CH DE ES FR GB GR IT LI NL SE**

(56) Documents cités:
EP-A- 0 062 944
DE-A- 1 517 523
DE-C- 14 211
DE-C- 252 001
FR-A- 683 096

(73) Titulaire: **Lopez, Fernand, 27, Rue Emile Barrière,
F-31200 Toulouse(FR)**

(72) Inventeur: **Lopez, Fernand, 27, Rue Emile Barrière,
F-31200 Toulouse(FR)**

(74) Mandataire: **Barre, Philippe, Cabinet
Barre-Gatti-Laforgue 95 rue des Amidonniers,
F-31069 Toulouse Cédex(FR)**

ACTORUM AG

## Description

L'invention concerne un dispositif d'épuration d'eau notamment salée, qui sera désignée dans la suite par "eau primaire", en vue de produire une eau douce potable. Elle vise un dispositif du type dans lequel l'épuration est produite, par osmose inverse, dose par dose, au cours de séquences discontinues de fonctionnement.

Il est connu d'utiliser des membranes semi-perméables sélectives d'osmose inverse pour épurer une eau et la rendre potable. Ce mode d'épuration présente l'avantage de réaliser en une seule opération de multiples séparations : élimination de la plupart des éléments dissous tels que le sel, suppression de la pollution bactérienne, élimination de colloïdes ou autres éléments susceptibles d'affecter et d'altérer la qualité chimique, l'odeur, la couleur et le goût des eaux. On sait que ce type de filtration exige que l'on exerce sur l'eau primaire une pression élevée supérieure à la pression osmotique caractéristique de l'eau concernée, pour provoquer son passage à travers la membrane semi-perméable et assure la filtration. Par exemple, pour une eau de mer de salinité de 35 g/l, la pression osmotique est de l'ordre de 25 bars, cependant que pour une eau saumâtre de salinité de 10 g/l, la pression osmotique est de l'ordre de 7 bars : des pressions de l'ordre de 3 à 4 fois ces valeurs sont généralement nécessaires pour assurer un débit de filtration satisfaisant.

Dans une première phase de recherches s'étalant de 1965 à 1975, on a tenté de réaliser des dispositifs simples, en particulier à action manuelle, pour mettre en oeuvre ce processus. Les brevets FR n° 1 474 929 du 15.02.1966, DE n° 1 517 523 du 9.12.1966, GB n° 1 436 111 du 24.03.1972 illustrent les dispositifs conçus lors de ces recherches. Toutefois, il ne semble pas que les idées développées aient débouché sur des réalisations effectives, car les dispositifs évoqués dans ces brevets ne réunissent pas toutes les conditions nécessaires à une exploitation pratique : qualité des performances, faible encombrement, facilité d'utilisation. Pour certains de ces dispositifs, il ne paraît pas possible en pratique d'atteindre les pressions nécessaires. Pour d'autres, il faut s'attendre à un rapide colmatage irréversible rendant les membranes complètement inopérantes. Pour d'autres encore, la pression nécessaire croît au cours du processus de filtration et devient très rapidement incompatible avec une mise en oeuvre manuelle ; il est à noter, à cet égard, que dans le dispositif du brevet FR n° 1 474 929 et dans le premier mode de réalisation du brevet GB n° 1 436 111, il est prévu des moyens manuels de pompage continu d'eau primaire ainsi qu'une poche élastique logée dans la chambre d'épuration et remplie de gaz sous pression : il semble que ces moyens combinés à un rejet d'eau primaire soient destinés à produire un courant d'eau à la surface de la membrane pour éviter l'accroissement de salinité. Toutefois, l'efficacité de ce système ne parait pas satisfaisante, cependant qu'il entraîne une complication notable de celui-ci qui en rendrait le coût incompatible avec celui admissible pour un petit dispositif d'usage courant, par exemple dispositif destiné à la survie individuelle de personnes dans un milieu hostile (épuration d'eau saumâtre) ou à la survie d'un naufragé sur une embarcation de secours (épuration d'eau de mer).

A partir de 1977, ces échecs ont amené les spécialistes de l'osmose inverse à analyser plus finement le problème posé. Tous se sont alors orientés vers une solution consistant à créer en continu un puissant courant d'eau primaire au voisinage de la membrane semi-perméable à l'aide de groupes de pompage entraînant le rejet de l'eau primaire surconcentrée. Les brevets FR n° 2 342 252 du 25.02.1977, n° 2 385 427 du 24.03.1978, US n° 4 187 173 du 14.03.1978, EU n° 0 018 128 du 1.04.1980, EU n° 0 059 275 du 27.02.1981 illustrent l'état actuel de la technique à cet égard. Selon ces documents, il apparaît qu'une voie de recherche a consisté à récupérer une partie de l'énergie de l'eau sous pression rejetée afin de l'utiliser pour contribuer à la compression de l'eau primaire. Toutefois, ces dispositifs hydrauliques sont devenus extrêmement complexes et très onéreux.

Il est à noter que ces dispositifs qui fonctionnent tous en continu sont généralement dotés de groupes motorisés de pompages, mais que certains brevets évoquent un actionnement manuel au moyen d'un levier manoeuvré alternativement dans un sens et dans l'autre (notamment le brevet US n° 4 187 173). D'après les informations du demandeur, ce dispositif manuel fait l'objet d'une exploitation effective sous la forme d'un dispositif portatif de dessalement ; mais son prix qui dépasse actuellement les 20 000 FF paraît devoir en limiter considérablement la diffusion. De plus son poids (6 kgs) et son encombrement (longueur : 76 cm) le rendent inadapté à un transport individuel dans des missions terrestres.

Par ailleurs, pour être complet, il convient de citer un autre type de dispositif de dessalement utilisable en mer, dans lequel la pression exercée sur l'eau à dessaler est produite, non plus par l'énergie d'un système mécanique, mais par une immersion du dispositif au coeur du milieu marin à une profondeur appropriée. Mais ces dispositifs ne sont évidemment pas utilisables lors de missions terrestres.

La présente invention vise un dispositif d'épuration par osmose inverse du type comprenant des moyens mécaniques de production de la pression nécessaire, afin d'être utilisable aussi bien en missions terrestres pour épurer des eaux saumâtres, qu'en milieu marin pour dessaler des eaux de mer.

L'objet de l'invention est de fournir un dispositif de structure simple, dont l'encombrement et le coût soient compatibles avec un transport et une utilisation individuelle.

Un autre objectif est de permettre d'obtenir de l'eau douce potable avec un effort très modéré, susceptible d'être produit par tout individu même dans un état de grande fatigue.

A cet effet, le demandeur s'est affranchi de la voie tracée depuis 10 ans par les recherches récentes et s'est orienté vers un dispositif à fonctionnement par séquences discontinues, permettant de produire à chaque séquence une dose d'eau douce. L'activité inventive a donc consisté à choisir un

principe de fonctionnement abandonné et a priori condamné par les spécialistes, et à trouver une solution extrêmement simple pour garantir l'efficacité du dispositif fonctionnant sur ce principe, qui satisfassent pleinement aux exigences de l'application.

Le dispositif d'épuration d'eau primaire notamment salée visé par l'invention comprend :

- une chambre d'eau primaire s'étendant le long d'un axe et adaptée pour supporter une pression élevée supérieure à la pression osmotique de ladite eau primaire,
- des moyens de remplissage de ladite chambre en eau primaire, préalablement à chaque séquence,
- des moyens de recueil d'eau potable à basse pression,
- au moins une membrane semi-perméable apte à réaliser une filtration par osmose inverse d'eau primaire contenue dans la chambre, ladite membrane étant logée dans ladite chambre de sorte qu'une de ses faces actives, dite face active amont, baigne dans l'eau primaire de celle-ci et que son autre face active, dite face active aval, communique avec les moyens de recueil d'eau potable,
- un piston mobile agencé pour pouvoir pénétrer axialement dans la chambre entre une position de retrait et une position de pénétration maximum et adapté de sorte que le volume ($V_2$) balayé par ledit piston lors de son déplacement soit faible par rapport à la capacité totale disponible ($V_1$) de la chambre,

Selon la présente invention, ce dispositif se caractérise en ce que :

. la chambre contient intérieurement un manchon coaxial dans lequel le piston est apte à se déplacer de façon étanche,

. la membrane semi-perméable est positionnée dans une portion annulaire périphérique de ladite chambre de façon à libérer la portion centrale de celle-ci pour le manchon coaxial,

. un organe rotatif d'entraînement, dit organe d'entrée est extérieurement articulé par un axe au voisinage d'une extrémité de la chambre de façon à pouvoir tourner dans un plan parallèle à l'axe de celle-ci,

. un premier pignon de type conique est porté par l'axe d'articulation de l'organe d'entrée, de façon à être solidaire en rotation de celui-ci,

. un second pignon de diamètre supérieur est diposé coaxialement à la chambre, à l'extérieur de celle-ci à proximité immédiate de son extrémité, ce second pignon étant pourvu d'un engrenage conique engrené avec le premier et étant doté d'un trou axial taraudé,

. des moyens de centrage et de butée sont associés au second pignon pour le maintenir en position axiale en prise avec le premier pignon,

. une vis s'étend selon l'axe de la chambre et du manchon pour venir en prise dans le trou taraudé du second pignon, ladite vis portant le piston,

. des moyens de calage en rotation sont associés à la vis pour permettre d'empêcher sa rotation.

Par "capacité totale disponible $V_1$", on entend la différence entre le volume total de la chambre lorsque le piston est en position de retrait, et le volume occupé par la membrane semi-perméable (et le cas échéant par tout autre accessoire disposé dans la chambre) : cette capacité $V_1$ représente donc le volume d'eau primaire qui peut être introduit initialement dans la chambre.

De préférence, la chambre et le piston sont agencés de sorte que le rapport $V_1/V_2$ de la capacité totale disponible de la chambre au volume balayé par le piston soit supérieur à 3, en particulier compris entre 4 et 12, par exemple de l'ordre de 6 à 8.

Les expérimentations ont permis de constater qu'un fonctionnement discontinu assurant une production d'eau potable par dose, est parfaitement efficace avec un dispositif combinant les moyens de l'invention, en l'absence de tout moyen auxiliaire de création d'un courant d'eau primaire. Les moyens mécaniques sont agencés à un bout de la chambre d'eau primaire pour donner un ensemble peu encombrant, parfaitement adapté pour répondre aux exigences de l'application. Ils permettent, en particulier, par un dimensionnement approprié, d'une part, de procurer un rapport de multiplication de forces entre organe d'entrée (notamment une manivelle) et vis compris entre 500 et 1 500, d'autre part, d'assurer une démultiplication de mouvement telle qu'un tour de l'organe d'entrée engendre un déplacement de la vis compris entre 0,5 et 2 mm.

Ainsi, un utilisateur développant une puissance très modérée sur l'organe d'entrée (inférieure à 20 watts) est apte à produire par l'entremise de ces moyens mécaniques et du piston, les pressions nécessaires sur l'eau primaire. Dans le cas d'une eau saumâtre, le piston et les moyens mécaniques d'entraînement sont adaptés sans difficulté pour produire une pression comprise entre 20 et 30 bars à partir d'une puissance inférieure à 20 watts. Ces moyens conviennent également à l'épuration d'une eau de mer et sont alors adaptés pour produire une pression comprise entre 50 et 80 bars à partir d'une puissance inférieure au même seuil. (Bien entendu, l'entraînement de l'axe de l'organe d'entrée peut, le cas échéant, être assuré par un moteur, notamment par un moteur électrique).

Par ailleurs, selon une autre caractéristique avantageuse de l'invention, la chambre d'eau primaire est prévue télescopique et constituée de deux enceintes cylindriques agencées pour coulisser étanchément l'une dans l'autre entre une position rétractée et une position déployée. Ce moyen se combine à l'ensemble des moyens déjà décrits pour permettre, à la fois, de disposer d'une chambre d'eau primaire de volume important par rapport à la dose d'eau potable désirée à chaque séquence, tout en bénéficiant d'un dispositif de faible encombrement à l'état inactif.

Pour le transport et le stockage, les deux enceintes sont rétractées l'une dans l'autre. Avant chaque utilisation, l'opérateur déploie ces enceintes pour conférer à la chambre d'eau primaire la capacité $V_1$ nécessaire en cours de fonctionnement.

Selon un mode de réalisation préféré, la chambre présente une forme générale cylindrique et le piston possède une section plus faible que celle de ladite chambre. Si $D_2$ représente le diamètre du piston et $H_2$ la hauteur de chambre balayée par celui-ci, la chambre est avantageusement dimensionnée de sorte que :

$$1,6 \, H_2 \leqq H_1 \leqq 2,4 \, H_2 \text{ et } 1,6 \, D_2 \leqq D_1 \leqq 2,4 \, D_2$$

où $H_1$ et $D_1$ représentent respectivement la hauteur totale de la chambre et son diamètre moyen.

La membrane semi-perméable d'osmose inverse peut être de tout type connu. En particulier, cette membrane peut être une membrane tubulaire de type connu en soi (en acétate de cellulose, polyamide aromatique ou autre), enroulée en spires dans la chambre d'eau primaire ; la face active amont de cette membrane est constituée par la face externe du tube qui la forme, et baigne dans l'eau primaire contenue dans ladite chambre, cependant que la face active aval est constituée par la face interne de la membrane et est en communication avec les moyens de recueil d'eau potable pour assurer l'écoulement de l'eau potable filtrée vers ceux-ci. Ces moyens de recueil comprennent en particulier, d'une part, un raccord externe de branchement se prolongeant par un canal qui traverse la paroi de la chambre, d'autre part, au moins un embout tubulaire disposé dans ce canal du côté interne ; cet embout est adapté pour maintenir une extrémité de la membrane tubulaire de façon que sa face active aval (face interne) communique avec le raccord externe. L'autre extrémité de la membrane semi-perméable peut être obturée de sorte que l'écoulement d'eau potable s'effectue à travers une seule extrémité ; cette autre extrémité peut également être fixée sur un autre embout, de la même façon que la première, pour autoriser un écoulement d'eau filtrée à travers les deux extrémités.

En outre, selon une autre caractéristique de l'invention, des moyens de retour du piston sont avantageusement prévus pour permettre, entre deux séquences, d'engendrer son déplacement rapide entre la position de pénétration maximum et la position de retrait.

D'autres caractéristiques, buts et avantages de l'invention ressortiront de la description qui suit en référence aux dessins annexés, lesquels en présentent à titre d'exemples non limitatifs deux modes de réalisation ; sur ces dessins qui font partie intégrante de la présente description :

- la figure 1 est une coupe par un plan axial d'un premier mode de réalisation, supposé au début d'une séquence de filtration,
- la figure 2 en est une coupe de détail,
- la figure 3 en est une coupe axiale montrant l'appareil à la fin d'une séquence de filtration,
- la figure 4 en est une coupe similaire montrant le dispositif après rétraction de ses enceintes l'une dans l'autre en vue du transport,
- les figures 5a, 5b, 5c, 5d, 5e, 5f sont des schémas illustrant l'utilisation de l'appareil,
- la figure 6 est une coupe par un plan axial d'un autre mode de réalisation.

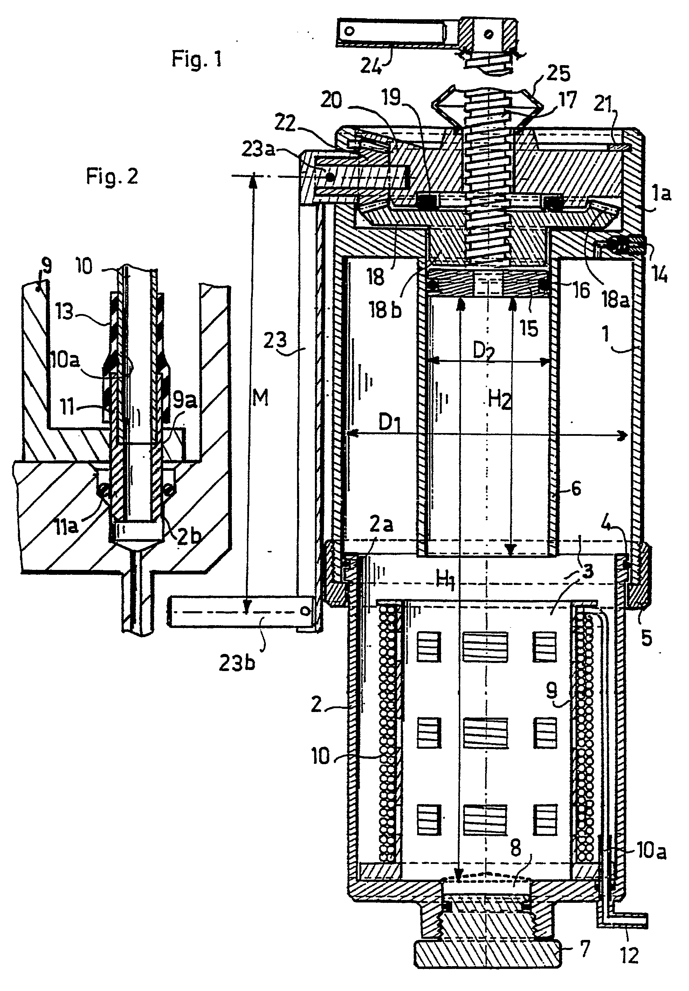

Le dispositif représenté à titre d'exemple aux figures 1, 2, 3 et 4, possède un encombrement total à l'état rétracté qui peut être d'environ 1,5 litre (il est représenté sur ces figures à une échelle égale à environ 0,7). Il est tout particulièrement destiné à compléter un équipement individuel emporté au cours de missions terrestres, en vue de fournir à l'intéressé de l'eau douce potable à partir d'eaux polluées et/ou saumâtres (taux de salinité : 10 g/l), provenant par exemple de marais, puits, mares...

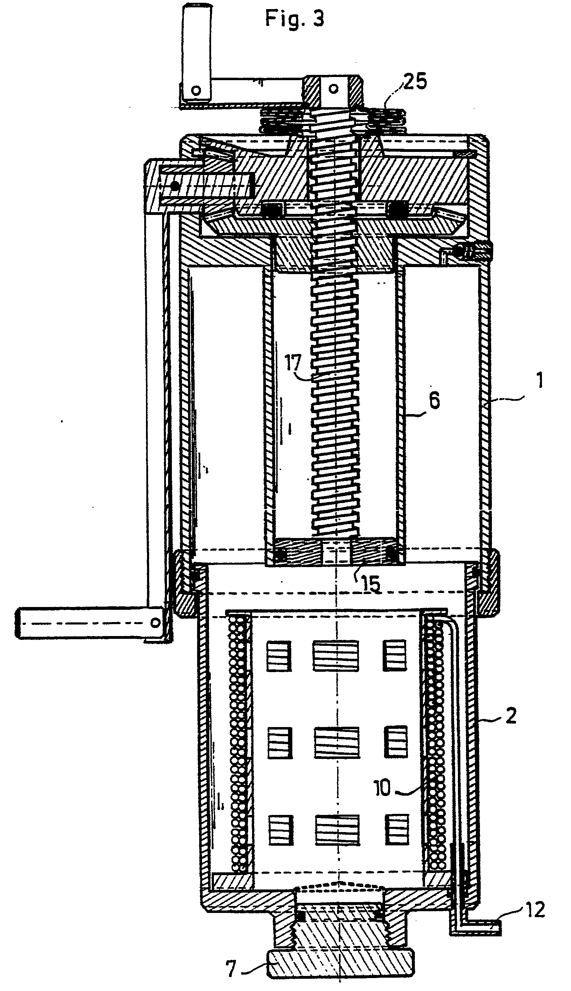

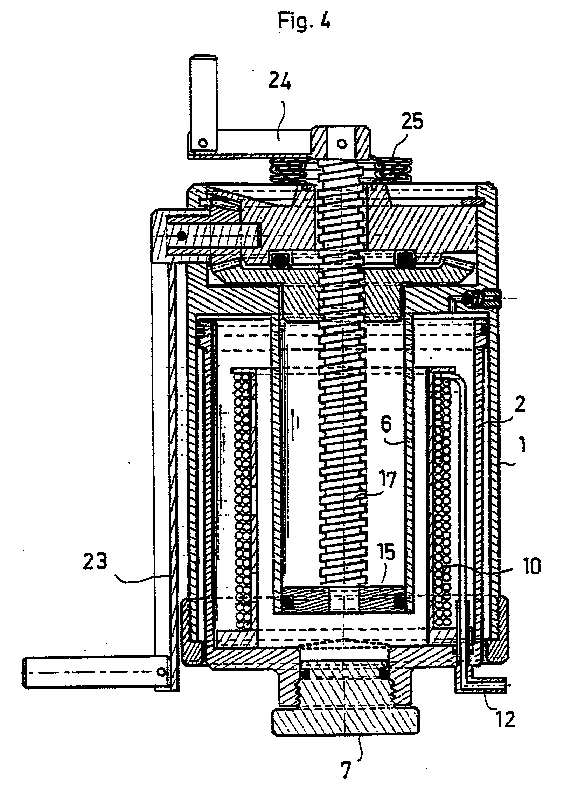

Ce dispositif comprend deux enceintes cylindriques 1 et 2 qui sont montées télescopiques l'une par rapport à l'autre et adaptées pour supporter une pression de l'ordre d'une centaine de bars. Ces enceintes se font face par une face ouverte et sont agencées avec des axes colinéaires, de façon que la seconde enceinte 2 puisse coulisser étanchément dans la première enceinte 1 entre une position rétractée (figure 4) et une position déployée (figures 1 et 3).

Dans cette dernière position, les deux enceintes délimitent une chambre dite chambre d'eau primaire 3. En l'exemple, la profondeur des deux enceintes est à peu près identique de façon à autoriser une rétraction complète de l'enceinte 2 dans l'enceinte 1.

Pour assurer l'étanchéité, la seconde enceinte 2 est pourvue sur une surépaisseur périphérique 2a d'un joint torique d'étanchéité 4 qui coopère avec la paroi interne de la première enceinte. Cette dernière est dotée d'une bague 5 vissée à son extrémité en vue de réaliser une butée de fin de course dans la position déployée.

La première enceinte 1 se prolonge à son autre extrémité par une bordure annulaire 1a et est intérieurement pourvue d'un manchon coaxial 6 qui s'étend sur sa hauteur. L'alésage de ce manchon possède un diamètre $D_2$ qui peut être de l'ordre de la moitié du diamètre moyen $D_1$ de la chambre 3. Ce manchon 6 s'ouvre à ses deux extrémités, d'un côté vers l'enceinte 2, et de l'autre à l'extérieur de l'enceinte 1.

Le fond de la seconde enceinte 2 est percé d'un large orifice de remplissage qui est obturé par un bouchon amovible 7 vissé dans celui-ci. En outre, cet orifice porte une capsule de préfiltrage symbolisée en 8, apte à stopper les éventuelles grosses particules en suspension dans l'eau primaire introduite.

Par ailleurs, l'enceinte 2 contient une bobine cylindrique ajourée 9 qui s'étend le long de celle-ci autour du volume axial situé à l'aplomb du manchon 6 précité et possède deux collerettes d'extrémité. Au cours de la rétraction des deux enceintes, le manchon 6 vient donc se loger à l'intérieur de cette bobine 9. Cette dernière porte un cordonnet tubulaire 10 qui est enroulé autour de celle-ci et est constitué par une membrane semi-perméable tubulaire d'osmose inverse de type connu, par exemple en acétate de cellulose. Une extrémité 10a de ladite membrane est associée à des moyens de recueil de l'eau douce obtenue à l'intérieur de celle-ci.

Comme le montre la figure de détail 2, l'extrémité 10a de la membrane tubulaire pénètre dans un embout tubulaire rigide 11 dont l'alésage correspond au diamètre externe de ladite membrane. Cet embout qui comporte un épaulement interne d'arrêt de la membrane est emmanché et collé dans un trou 9a dont est percée la collerette correspondante de la bobine 9 ; l'extrémité de cet embout, opposée à la membrane, pénètre dans un canal 2b dont est percé le fond de l'enceinte 2. Ce canal comprend un tronçon de diamètre élargi dans lequel est logé un joint torique 11a assurant l'étanchéité autour de l'embout 11, entre celui-ci et le fond de l'enceinte 2. Le canal 2b se prolonge dans un raccord externe de branchement 12 qui peut être muni d'un conduit souple ou couler directement dans un conteneur.

Un manchon en latex 13 est engagé sur la partie intérieure débordante de l'embout 11 et sur la membrane tubulaire 10 afin d'assurer l'étanchéité. Il est à noter que ce montage garantit une excellente étanchéité qui croît avec la pression régnant dans la chambre d'eau primaire 3.

L'autre extrémité de la membrane semi-perméable 10 peut être obturée ; il est également possible de connecter cette autre extrémité à un autre embout agencé comme le premier en vue d'assurer un écoulement dans la membrane dans les deux sens. De préférence, les deux embouts débouchent alors dans le même raccord externe.

L'ensemble, bobine, membrane, embout, peut constituer un tout interchangeable afin de permettre un remplacement facile des membranes. Il est à noter qu'un encliquetage de la bobine peut être prévu pour maintenir l'ensemble en place.

Par ailleurs, la première enceinte est pourvue d'une soupape tarée 14 qui s'ouvre vers l'extérieur si la pression dans la chambre 3 dépasse un seuil de tarage prédéterminé.

De plus, le manchon 6 de la première enceinte contient un piston cylindrique 15 qui peut se déplacer à l'intérieur de ce manchon entre une position de retrait (figure 1) et une position de pénétration maximum (figure 3). Ce piston porte sur son pourtour un joint torique 16 qui coopère avec l'alésage du manchon.

Le piston 15 est associé à des moyens mécaniques d'entraînement à actionnement manuel, qui permettent de le déplacer entre ses deux positions. Au cours de cette translation, le piston balaye le volume interne $V_2$ du manchon. Ce volume est faible par rapport au volume total de la chambre primaire. La dose d'eau potable produite à chaque séquence est égale à ce volume $V_2$.

Par exemple, la hauteur $H_2$ balayée par le piston peut être de l'ordre de la moitié de la hauteur totale $H_1$ de la chambre d'eau primaire, cependant que le diamètre $D_2$ dudit piston peut lui-même être de l'ordre de la moitié du diamètre moyen $D_1$ de ladite chambre. Ainsi le rapport du volume total de la chambre au volume balayé par le piston est très approximativement de l'ordre de 8. La membrane semi-perméable et la bobine qui la porte occupent un volume faible par rapport au volume total de la chambre (de l'ordre de 15 % à 20 %) de sorte que le rapport $V_1/V_2$ entre la capacité totale disponible de la chambre $V_1$ et le volume balayé $V_2$ est en l'exemple très supérieur à 3 et de l'ordre de 7. Ainsi, à chaque séquence, la dose d'eau potable produite correspond à 1/7 de la quantité d'eau primaire introduite.

Le piston 15 est porté par une vis 17 qui s'étend le long de l'axe des enceintes 1, 2 et du manchon 6. Cette vis traverse un trou axial taraudé d'un pignon 18 disposé coaxialement à l'enceinte 1 à l'intérieur de sa bordure annulaire 1a. Ce pignon 18 possède un engrenage conique 18a sur sa périphérie et un collet central 18b qui est logé dans l'orifice du manchon 6 pour assurer un centrage axial dudit pignon.

Ce pignon 18 est maintenu à l'opposé de l'enceinte 1 par une butée à billes 19 emmanchée dans une pièce de retenue 20. Cette pièce 20 est percée axialement pour préserver le libre passage de la vis 17. Elle est retenue dans la bordure annulaire 1a de l'enceinte par un clip 21.

De plus, sur un côté, la pièce 20 forme un logement dans lequel est articulé un pignon conique 22 de diamètre inférieur au précédent.

Ce pignon 22, en prise avec le pignon 18, est porté par un axe d'articulation 23a, solidaire d'une manivelle d'entrée 23 et orthogonal à l'axe de l'enceinte 1. Cette manivelle est articulée sur la bordure annulaire 1a de l'enceinte 1, de façon à pouvoir tourner à proximité de cette enceinte dans un plan parallèle à l'axe de ladite enceinte. Le pignon 22 est claveté sur l'axe d'articulation 23a.

La manivelle 23 de longueur M porte à son extrémité libre une tige de manoeuvre 23b qui peut être vissée ou articulée sur celle-ci.

En pratique, le dimensionnement de ces moyens mécaniques est avantageusement prévu de sorte que le rapport de multiplication de force entre manivelle et vis soit compris entre 500 et 1 500, et que la démultiplication du mouvement soit telle qu'un tour de manivelle engendre un déplacement de la vis compris entre 0,5 et 2 mm. Ceci permet avec des puissances très modestes (dans tous les cas inférieures à 20 watts) de produire les pressions nécessaires au niveau du piston 15.

De plus, la vis 17 est équipée à son extrémité libre d'une courte manivelle 24 qui remplit deux fonctions: d'une part, elle sert de moyen de préhension permettant de caler ladite vis et de l'empêcher de tourner au cours des séquences de filtration, d'autre part, elle sert de moyens de retour rapide du piston après chaque séquence.

Il est à noter qu'un soufflet 25 est de préférence prévu extérieurement autour de la vis 17 pour protéger celle-ci lorsqu'elle se trouve à l'extérieur de l'enceinte 1.

A titre d'illustration, est fourni ci-après un exemple de dimensionnement approximatif d'un appareil apte à produire environ 1 litre d'eau douce en 10 minutes :

- Encombrement hors tout (à l'état rétracté) : 1,5 litre
- Volume total de la chambre (à l'état déployé) : 1,4 litre
- Course du piston : 10 cm
- Diamètre du piston : 5 cm
- Volume $V_2$ balayé par le piston : 200 cm³
- Volume occupé par la membrane et la bobine : 200 cm³
- Capacité totale disponible de la chambre $V_1$ = 1 200 cm³
- Rapport $V_1/V_2$ : 6
- Dose d'eau potable obtenue par séquence : 200 cm³
- Taux de conversion : 16,6 %
- Pas de la vis = 4 mm
- Rapport des pignons coniques : 4
- Déplacement de la vis par tour de la manivelle 23 : 1 mm
- Longueur M de la manivelle : 15 cm
- Rapport de multiplication de forces entre manivelle et vis : 940

- Vitesse d'entraînement prévu pour la manivelle : 1 tour/s
- Pression du piston : 30 bars
- Pression de tarage de la soupape 14 : 50 bars
- Puissance à développer : 6 watts
- Durée d'une séquence de filtration : 100 s
- Durée prévue pour vidanger et remplir la chambre : 20 s
- Production possible à l'heure : 30 séquences soit 6 litres d'eau douce potable.

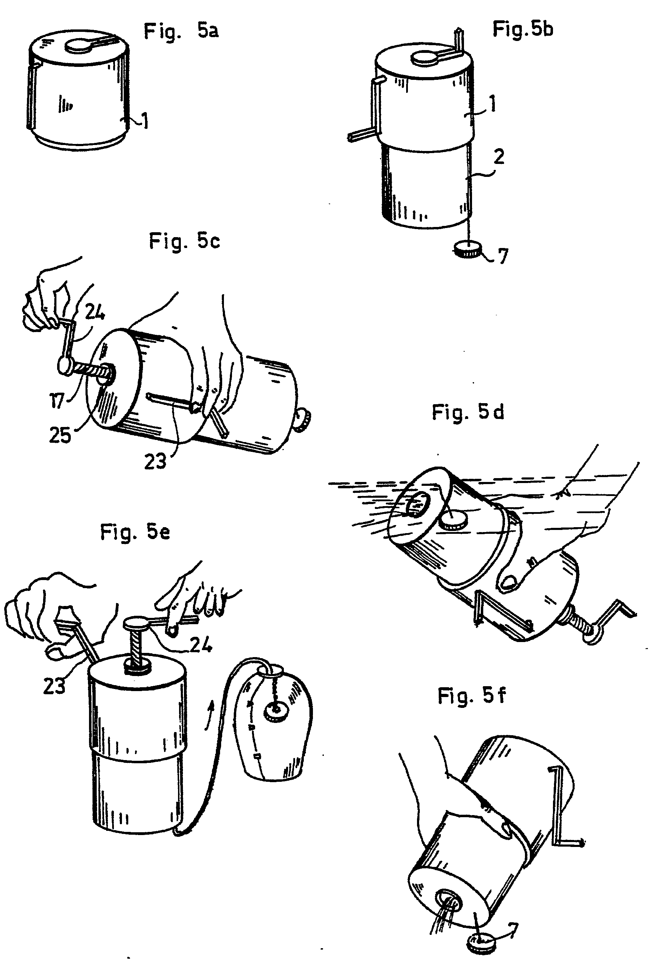

Les figures 5a à 5f illustrent le fonctionnement d'un tel appareil.

La figure 5a montre l'appareil à l'état rétracté en vue de son transport et de son stockage. L'utilisation de matériaux composites dans la fabrication de ce dernier permet de lui conférer un poids à vide inférieur à 2 kgs.

La figure 5b illustre le déploiement des enceintes 1 et 2, le bouchon 7 ayant été ôté.

La figure 5c illustre la phase de retour rapide de la vis 17 depuis la position de pénétration maximum vers la position de retrait, en actionnant la courte manivelle 24 et en retenant la manivelle 23.

La figure 5d illustre le remplissage de la chambre d'eau primaire.

La figure 5c illustre une séquence de filtration dont la durée est de l'ordre de 100 secondes. L'opérateur actionne la manivelle 23 et retient la manivelle 24. En cas de rotation trop rapide, la soupape 14 laisse jaillir l'eau primaire et l'opérateur doit ralentir son mouvement.

Enfin, la figure 5f illustre la vidange de la chambre entre deux séquences de filtration.

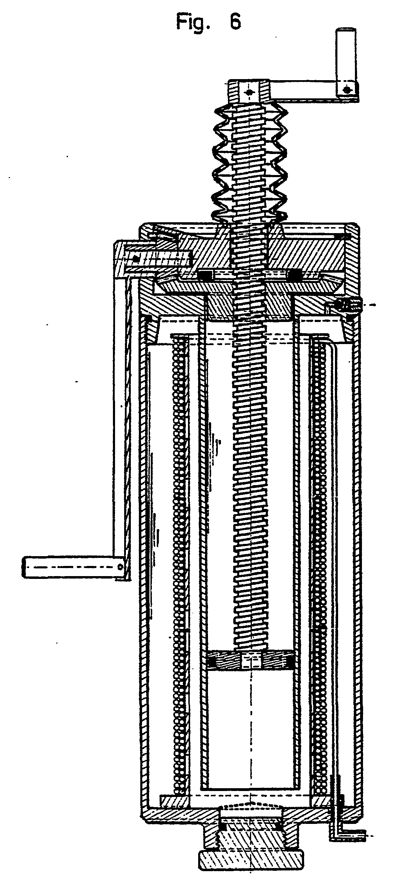

La figure 6 représente un autre exemple de réalisation où la chambre d'eau primaire est délimitée par une seule enceinte. Cet appareil possède une forme allongée qui permet de l'inclure sans difficulté dans un équipement de survie pour bateau de plaisance, afin de dessaler de l'eau de mer (taux de salinité : 35 g/l).

Ses caractéristiques peuvent être les suivantes:
- Encombrement hors tout : 1,6 litre
- Volume total de la chambre : l litre
- Course du piston : 20 cm
- Diamètre du piston : 2,5 cm
- Volume $V_2$ balayé par le piston : 100 cm$^3$
- Volume occupé par la membrane et la bobine : 200 cm$^3$
- Capacité totale disponible de la chambre : 800 cm$^3$
- Rapport $V_1/V_2$ : 8
- Dose d'eau potable obtenue par séquence : 100 cm$^3$
- Taux de conversion : 12,5 %
- Pas de la vis : 4 mm
- Rapport des pignons coniques : 4
- Déplacement de la vis par tour de la manivelle 23 : 1 mm
- Longueur M de la manivelle : 15 cm
- Rapport de multiplication de forces entre manivelle et vis : 940
- Vitesse d'entraînement prévu pour la manivelle : 1 tour/s
- Pression du piston : 60 bars
- Pression de tarage de la soupape 14 : 80 bars
- Puissance à développer : 3 watts

- Durée d'une séquence de filtration : 200 s
- Durée prévue pour vidanger et remplir la chambre : 30 s
- Production possible à l'heure : 15 séquences soit 1,5 litre d'eau douce potable.

**Revendications**

1/ - Dispositif d'épuration d'eau primaire notamment salée, destiné à produire, par osmose inverse, de l'eau douce potable, dose par dose, au cours de séquences discontinues de fonctionnement, ce dispositif comprenant :
- une chambre d'eau primaire (3) s'étendant le long d'un axe et adaptée pour supporter une pression élevée supérieure à la pression osmotique de ladite eau primaire,
- des moyens (7) de remplissage de ladite chambre en eau primaire, préalablement à chaque séquence,
- des moyens (11, 12) de recueil d'eau potable à basse pression,
- au moins une membrane semi-perméable (10) apte à réaliser une filtration par osmose inverse d'eau primaire contenue dans la chambre (3), ladite membrane étant logée dans ladite chambre de sorte qu'une de ses faces actives, dite face active amont, baigne dans l'eau primaire de celle-ci et que son autre face active, dite face active aval, communique avec les moyens de recueil d'eau potable,
- un piston mobile (15), agencé pour pouvoir pénétrer axialement dans la chambre (3) entre une position de retrait et une position de pénétration maximum et adapté de sorte que le volume ($V_2$) balayé par ledit piston lors de son déplacement soit faible par rapport à la capacité totale disponible ($V_1$) de la chambre (3), ledit dispositif étant caractérisé en ce que:
. la chambre contient intérieurement un manchon coaxial (6) dans lequel le piston est apte à se déplacer de façon étanche,
. la membrane semi-perméable est positionnée dans une portion annulaire périphérique de ladite chambre de façon à libérer la portion centrale de celle-ci pour le manchon coaxial (6),
. un organe rotatif d'entraînement, dit organe d'entrée (23) est extérieurement articulé par un axe (23a) au voisinage d'une extrémité de la chambre de façon à pouvoir tourner dans un plan parallèle à l'axe de celle-ci,
. un premier pignon (22) de type conique est porté par l'axe d'articulation (23a) de l'organe d'entrée de façon à être solidaire en rotation de celui-ci,
. un second pignon (18) de diamètre supérieur est disposé coaxialement à la chambre, à l'extérieur de celle-ci à proximité immédiate de son extrémité, ce second pignon étant pourvu d'un engrenage conique (18a) engrené avec le premier et étant doté d'un trou axial taraudé,
. des moyens de centrage (18b) et de butée (19-21) sont associés au second pignon (18) pour le maintenir en position axiale en prise avec le premier pignon (22),

. une vis (17) s'étend selon l'axe de la chambre (1) et du manchon (6) pour venir en prise dans le trou taraudé du second pignon, ladite vis portant le piston (15),

. des moyens de calage en rotation (24) sont associés à la vis (17) pour permettre d'empêcher sa rotation.

2/ - Dispositif d'épuration selon la revendication 1, caractérisé en ce que la chambre d'eau primaire (3) est télescopique et est constituée de deux enceintes cylindriques (1, 2) agencées pour coulisser étanchément l'une dans l'autre entre une position rétractée et une position déployée, les deux enceinte formant dans cette dernière position la chambre d'eau primaire de capacité totale $V_1$.

3/ - Dispositif d'épuration selon la revendication 2, caractérisé en ce que la chambre (3) présente une forme générale cylindrique de hauteur totale $H_1$ et de diamètre moyen $D_1$, tels que

$$1,6\ H_2 \leq H_1 \leq 2,4\ H_2 \text{ et } 1,6\ D_2 \leq D_1 \leq 2,4\ D_2$$

où $H_2$ est la hauteur de chambre balayée par le piston (15) et $D_2$ le diamètre dudit piston.

4/ - Dispositif d'épuration selon l'une des revendications 2 ou 3, caractérisé en ce que :

. une des enceintes, dite première enceinte (1), est pourvue du manchon coaxial (6) dans lequel le piston est apte à se déplacer de façon étanche,

. l'autre enceinte, dite seconde enceinte (2), contient la membrane semi-perméable (10) positionnée dans une portion annulaire périphérique de ladite seconde enceinte de façon à permettre la rétraction des deux enceintes l'une dans l'autre.

5/ - Dispositif d'épuration selon la revendication 4, caractérisé en ce que les moyens de remplissage sont constitués par un bouchon amovible (7) étanchément vissé dans le fond de la seconde enceinte (2).

6/ - Dispositif d'épuration selon l'une des revendications 4 ou 5, caractérisé en ce que la membrane semi-perméable (10) est une membrane tubulaire enroulée en spires dans la portion périphérique de la seconde enceinte (2) et en ce que les moyens de recueil comprennent, d'une part, un raccord externe de branchement (12) se prolongeant par un canal (2b) qui traverse le fond de la seconde enceinte (2), d'autre part, au moins un embout tubulaire (11) disposé dans ledit canal du côté intérieur et adapté pour maintenir une extrémité (10a) de la membrane tubulaire de façon que sa face active aval constituée par sa face interne communique avec le raccord externe.

7/ - Dispositif d'épuration selon l'une des revendications 4, 5 ou 6, caractérisé en ce que :

. l'organe d'entrée (23) est une manivelle articulée sur une bordure annulaire (1a) prolongeant la première enceinte (1) à son extrémité libre, de façon à pouvoir tourner à proximité de celle-ci,

. le premier pignon (22) et le second pignon (18) sont logés à l'intérieur de la bordure annulaire (1a),

. la vis (17) est dotée à son extrémité opposée au piston d'un moyen de préhension (24) permettant de la caler pour l'empêcher de tourner.

8/ - Dispositif selon l'une des revendications précédentes, pour l'épuration d'une eau saumâtre, caractérisé en ce que le piston, l'organe d'entrée, le premier pignon, le second pignon et la vis sont adaptés pour permettre audit piston de produire une pression comprise entre 20 et 30 bars à partir d'une puissance développée sur la manivelle inférieure à 20 watts.

9/ - Dispositif selon l'une des revendications précédentes, pour l'épuration d'une eau de mer, caractérisé en ce que le piston, l'organe d'entrée, le premier pignon, le second pignon et la vis sont adaptés pour permettre au piston de produire une pression comprise entre 50 et 80 bars à partir d'une puissance développée sur la manivelle inférieure à 20 watts.

10/ - Dispositif d'épuration selon l'une des revendications 8 ou 9, caractérisé en ce que la manivelle (23), les deux pignons (18, 22) et la vis (17) sont dimensionnés, d'une part, pour procurer un rapport de multiplication de forces entre manivelle et vis compris entre 500 et 1500, d'autre part, pour assurer une démultiplication de mouvement telle qu'un tour de l'organe d'entrée engendre un déplacement de la vis compris entre 0,5 et 2 mm.

11/ - Dispositif d'épuration selon l'une des revendications précédentes, caractérisé en ce qu'il comprend des moyens de retour du piston (24), adaptés pour permettre d'engendrer son déplacement rapide entre la position de pénétration maximum et la position de retrait.

12/ - Dispositif d'épuration selon les revendications 7 et 11 prises ensemble, caractérisé en ce que le moyen de préhension en vue d'empêcher la rotation de la vis et les moyens de retour du piston sont constitués par une courte manivelle (24) solidarisée à l'extrémité de ladite vis.

**Patentansprüche**

1. Vorrichtung zum Reinigen von Rohwasser vor allem Salzwasser, zwecks absatzweiser Herstellung im Laufe nicht kontinuierlicher Operationsfolgen von trinkbarem Süßwasser durch Umkehrosmose, wobei die besagte Vorrichtung die folgenden Teile umfaßt:

– eine Rohwasserkammer (3), die sich entlang der einen Achse erstreckt und so beschaffen ist, daß sie einem hohen Druck, der höher ist als der osmotische Druck des besagten Rohwassers, standhält,

– Mittel (7) zum Füllen der besagten Kammer mit Rohwasser, vor jeder Folge,

– Mittel (11, 12) zur Erfassung von trinkbarem Wasser unter niedrigem Druck,

– mindestens eine halbdurchlässige Membran (10), die so beschaffen ist, daß sie Filtration durch Umkehrosmose des in Kammer (3) enthaltenen Rohwassers bewirkt, wobei die besagte Membran in der besagten Kammer so eingerichtet ist, daß sich eine ihrer aktiven Oberflächen, die sogenannte stromaufwärts befindliche Oberfläche, in dem in der besagten Kammer enthaltenen Rohwasser befindet, während ihre andere aktive Oberfläche, die sogenannte stromabwärts befindliche aktive Oberfläche, mit den Mitteln zur Erfassung des trinkbaren Wassers in Verbindung steht,

– einen beweglichen Kolben (15), der so beschaffen ist, daß er zwischen einer Rückzugslage und einer Lage maximaler Eindringung axial in Kammer (3) eindringen kann, und der so konstruiert ist, daß das von dem besagten Kolben während dessen Bewegung durchdrungene Volumen $(V_2)$ im Vergleich mit dem verfügbaren Gesamtvolumen $(V_1)$ der Kammer (3) gering ist, wobei die besagte Vorrichtung dadurch gekennzeichnet ist, daß

. die Kammer innen eine koaxiale Hülse (6) enthält, in der sich der Kolben auf dichte Weise bewegen kann,

. die halbdurchlässige Membran in einem peripheren ringförmigen Teil der besagten Kammer so angeordnet ist, daß der Mittelteil der besagten Kammer für die Koaxialhülse (6) frei bleibt,

. ein drehbares Antriebsorgan, das sogenannte Einlaßorgan (23) extern mit Hilfe einer Spindel (23a) angelenkt ist, und zwar in der Nähe des einen Endes der Kammer, so daß Drehung in einer zur Achse der besagten Kammer parallelen Ebene möglich ist,

. ein erstes Zahnrad (22) kegeliger Art an der Drehspindel (23a) des Einlaßorgans so angeordnet ist, daß es im Zustand der Drehung mit der besagten Spindel fest verbunden ist,

. ein zweites Zahnrad (18) mit größerem Durchmesser koaxial zu der Kammer und an deren Außenseite in unmittelbarer Nähe ihres Endes angeordnet ist, wobei das besagte zweite Zahnrad mit einer kegeligen, in das erste Zahnrad eingreifenden Verzahnung (18a) und einem axialen Gewindeloch versehen ist,

. Zentriermittel (18b) und Anschlagmittel (19–21) mit dem zweiten Zahnrad (18) in Verbindung stehen, so daß sie dieses in axialer Lage und im Eingriff mit dem besagten ersten Zahnrad (22) erhalten,

. eine Schraube (17) sich entlang der Achse der Kammer (1) und der Hülse (6) erstreckt, um in das Gewindeloch des zweiten Zahnrads einzugreifen, wobei Kolben (15) an der besagten Schraube angebracht ist,

. Mittel zur Verkeilung im Drehsinne (24) mit Schraube (17) in Verbindung stehen, um deren Drehung zu verhindern.

2. Reinigungsvorrichtung nach Anspruch 1, dadurch gekennzeichnet, daß Rohwasserkammer (3) teleskopisch ist und sich aus zwei zylindrischen Gehäusen (1, 2) zusammensetzt, die so beschaffen sind, daß sie zwischen einer zurückgezogenen und einer ausgefahrenen Lage dicht ineinander gleiten, wobei die beiden Gehäuse in dieser letzteren Lage die Rohwasserkammer mit dem Gesamtvolumen $V_1$ bilden.

3. Reinigungsvorrichtung nach Anspruch 2, dadurch gekennzeichnet, daß Kammer (3) eine allgemein zylindrische Form aufweist, deren Gesamthöhe $H_1$ und deren mittlerer Durchmesser $D_1$ ist, und zwar sind

$$1,6\ H_2 \leq H_1 \leq 2,4\ H_2 \text{ und } 1,6\ D_2 \leq D_1 \leq 2,4\ D_2$$

wobei $H_2$ die Höhe der vom Kolben (15) durch-

drungenen Kammer und $D_2$ der Durchmesser des besagten Kolbens ist.

4. Reinigungsvorrichtung nach einem der Ansprüche 2 oder 3, dadurch gekennzeichnet, daß

. eines der Gehäuse, das sogenannte erste Gehäuse (1) mit der Koaxialhülse (6) versehen ist, in der sich der Kolben in dichter Weise bewegen kann,

. das andere Gehäuse, das sogenannte zweite Gehäuse (2), die halbdurchlässige Membran (10) enthält, die so in einem peripheren ringförmigen Teil des besagten zweiten Gehäuses angeordnet ist, daß die beiden Gehäuse ineinander zurückgezogen werden können.

5. Reinigungsvorrichtung nach Anspruch 4, dadurch gekennzeichnet, daß die Füllmittel in einem lösbaren Stopfen (7) bestehen, der dicht in dem Boden des zweiten Gehäuses (2) eingeschraubt ist.

6. Reinigungsvorrichtung nach einem der Ansprüche 4 oder 5, dadurch gekennzeichnet, daß die halbdurchlässige Membran (10) eine spiralförmig in dem peripheren Teil des zweiten Gehäuses (2) gewickelte rohrförmige Membran ist, sowie dadurch, daß die Erfassungsmittel einerseits einen externen Abzweiganschluß (12) umfassen, der sich in einem den Boden des zweiten Gehäuses (2) durchdringenden Kanal (2b) fortsetzt, und andererseits mindestens einen rohrförmigen Stutzen (11), der an der Innenseite des besagten Kanals angeordnet und so beschaffen ist, daß er ein Ende (10a) der rohrförmigen Membran so hält, daß deren stromabwärts befindliche aktive Oberfläche, die durch deren innere Oberfläche gebildet wird, mit dem externen Anschluß in Verbindung steht.

7. Reinigungsvorrichtung nach einem der Ansprüche 4, 5 oder 6, dadurch gekennzeichnet, daß

. das Einlaßorgan (23) eine an einem ringförmigen, das erste Gehäuse (1) an seinem freien Ende fortsetzenden Rand (1a) angelenkte Kurbel ist, so daß Drehung in Nähe des besagten Gehäuses möglich ist,

. das erste Zahnrad (22) und das zweite Zahnrad (18) im Inneren des ringförmigen Randes (1a) angeordnet sind,

. die Schraube (17) an dem dem Kolben gegenüberliegenden Ende mit einem Greifmittel (24) versehen ist, mit dem sie verkeilt werden kann, um deren Drehung zu verhindern.

8. Vorrichtung nach einem der vorstehenden Ansprüche zum Reinigen eines brackigen Wassers, dadurch gekennzeichnet, daß der Kolben, das Einlaßorgan, das erste Zahnrad, das zweite Zahnrad und die Schraube so beschaffen sind, daß sie den besagten Kolben zur Erzeugung eines Druckes zwischen 20 und 30 bar befähigen, wenn auf die Kurbel eine Leistung von weniger als 20 Watt ausgeübt wird.

9. Vorrichtung nach einem der vorstehenden Ansprüche zum Reinigen von Seewasser, dadurch gekennzeichnet, daß der Kolben, das Einlaßorgan, das erste Zahnrad, das zweite Zahnrad und die Schraube so beschaffen sind, daß sie dem Kolben die Erzeugung eines Druckes zwischen 50 und 80 bar ermöglichen, wenn auf die Kurbel eine Leistung von weniger als 20 Watt ausgeübt wird.

10. Reinigungsvorrichtung nach einem der Ansprüche 8 oder 9, dadurch gekennzeichnet, daß die Kurbel (23), die beiden Zahnräder (18, 22) und die Schraube (17) so dimensioniert sind, daß sie einerseits ein Kraftverstärkungsverhältnis zwischen 500 und 1500 zwischen der Kurbel und der Schraube bewirken und andererseits -eine Bewegungsuntersetzung bedingen, so daß eine Umdrehung des Einlaßorgans eine Verlagerung der Schraube zwischen 0,5 und 2 mm bewirkt.

11. Reinigungsvorrichtung nach einem der vorstehenden Ansprüche, dadurch gekennzeichnet, daß die Mittel zur Rückführung des Kolbens (24) umfaßt, die so beschaffen sind, daß sie dessen schnelle Verschiebung zwischen der Lage maximaler Eindringung und der Rückzugslage bewirken können.

12. Reinigungsvorrichtung nach den Ansprüchen 7 und 11 gemeinsam, dadurch gekennzeichnet, daß das Greifmittel zum Verhindern der Schraubendrehung und die Mittel zum Rückstellen des Kolbens in einer kurzen Kurbel (24) bestehen, die mit dem Ende der besagten Schraube fest verbunden ist.

## Claims

1. Device for purifying raw, in particular salt water, with a view to producing, by inverse osmosis, drinkable fresh water, batch by batch, in the course of intermittent operating sequences, whereby said device comprises:
   — a raw-water chamber (3) extending along one axis and capable of withstanding an elevated pressure higher than the osmotic pressure of said raw water,
   — means (7) for filling said chamber with raw water, prior to each sequence,
   — means (11, 12) for collecting drikable water at low pressure,
   — at least one semi-permeable membrane (10) capable of bringing about filtration by inverse osmosis of the raw water contained in chamber (3), said membrane being located within said chamber in such a way that one of its active faces, the so-called upstream active face, is immersed in the raw water contained in said chamber, whereas its other active face, the so-called downstream active face, communicates with the means for collecting drinkable water,
   — a mobile piston (15), so designed as to be capable to penetrate axially into chamber (3) between a retracted position and a position of maximum penetration and so designed that volume ($V_2$) passed through by said piston during its displacement is small by comparison with the total available capacity ($V_1$) of chamber (3), said device being caracterised in that:
   . inside the chamber there is a coaxial sleeve (6), within which the piston is capable of moving in tight manner,
   . the semi-permeable membrane is located in a peripheral annular part of said chamber so as to free the central part of the latter for coaxial sleeve (6),
   . a rotary drive element, the so-called admission element (23), is externally articulated by means of a spindle (23a) close to one end of the chamber so as to be able to turn in a plane parallel to the axis of the latter,
   . a first gearwheel (22) of bevelled type is mounted on articulation spindle (23a) of the admission element so as to be firmly connected with the latter in the rotary sense,
   . a second gearwheel (18) of larger diameter is arranged coaxially with the chamber, at the outside of the latter and in immediate proximity of its end, this second gearwheel being provided with bevelled toothing (18a) so as to mesh with the first gearwheel and endowed with a threaded axial hole,
   . means for centering (18b) and abutment (19–21) are associated with the second gearwheel (18) so as to maintain it in axial position where it engages the first gearwheel (22),
   . a screw (17) extends along the axis of the chamber (1) and sleeve (6) so as to engage the threaded hole in the second gearwheel, piston (15) being mounted on said screw,
   . means for blocking rotary movement (24) are associated with screw (17), making it possible to prevent its rotation.

2. Purification device according to claim 1, characterised in that raw-water chamber (3) is telescopic and comprises two cylindrical cases (1, 2) designed to slide tightly in one another between a retracted and an extended position, the two cases forming in this latter position the raw-water chamber with a total capacity $V_1$.

3. Purification device according to claim 2, characterised in that chamber (3) is of generally cylindrical form with a total height $H_1$ and mean diameter $D_1$, such that
   $1.6 H_2 \leq H_1 \leq 2.4 H_2$ and $1.6 D_2 \leq D_1 \leq 2.4 D_2$,
   where $H_2$ is the height of the chamber through which passes piston (15) and $D_2$ is the diameter of said piston.

4. Purification device according to one of claims 2 or 3, characterised in that
   . one of the cases, the so-called first case (1), is provided with a coaxial sleeve (6) in which the piston is capable of moving in tight manner,
   . the other case, the so-called second case (2), contains the semi-permeable membrane (10) located within a peripheral annular part of said second case so as to enable retraction of the two cases, one within the other.

5. Purification device according to claim 4, characterised in that the filling means consist in a removable plug (7), tightly screwed into the base of the second case (2).

6. Purification device according to one of claims 4 or 5, characterised in that semi-permeable membrane (10) is a tubular membrane wound helically within the peripheral part of second case (2) and in that the collecting means comprise, on the one hand, an external branching connector (12) extending through a duct (2b) which passes through the base of the second case (2), and on the other hand, at least one tubular stub (11) located on the inside of said duct and designed to maintain one end (10a) of the tubular membrane in such a way that its downstream active face constituted by its inner face communicates with the external connector.

7. Purifying device according to one of claims 4, 5 or 6, characterised in that

. admission element (23) is a crank articulated on an annular rim (1a) continuing the first case (1) at its free end, so as to enable turning in the vicinity of the latter,

. the first gearwheel (22) and the second gearwheel (18) are located within annular rim (1a),

. screw (17) is provided at its end opposite to the piston with a gripping means (24) enabling it to be blocked so as to prevent it fom turning.

8. Device according to one of the preceding claims for purifying brackish water, characterised in that the piston, the admission element, the first gearwheel, the second gearwheel and the screw are such as to enable said piston to procuce a pressure between 20 and 30 bars, when a power of less than 20 watts is applied to the crank.

9. Device according to one of the preceding claims for purifying sea water, characterised in that the piston, the admission element, the first gearwheel, the second gearwheel and the screw are such as to enable the piston to produce a pressure from between 50 and 80 bars, when the crank is subjected to a power of less than 20 watts.

10. Purifying device according to one of claims 8 or 9, characterised in that crank (23), the two gearwheels (18, 22) and screw (17) are so dimensioned, on the one hand, as to produce, between the crank and the screw, a force multiplication between 500 and 1500, and, on the other hand, so as to ensure reduction of the movement in such a way that one turn of the admission element causes displacement of the screw by between 0.5 and 2 mm.

11. Purification device according to one of the preceding claims, characterised in that it comprises means for returning piston (24), enabling it to be moved rapidly between the position of maximum penetration and the retracted position.

12. Purification device according to claims 7 and 11, jointly characterised in that the gripping means for preventing rotation of the screw and the means for returning the piston consist in a short crank (24) firmly connected with the end of said screw.

Fig. 1

Fig. 2

Fig. 3

## Fig. 4

Fig. 5a

Fig. 5b

Fig. 5c

Fig. 5d

Fig. 5e

Fig. 5f

Fig. 6